# EUROPEAN PATENT APPLICATION

(11) **EP 4 831 606 A1**
(43) Date of publication of application: **28.10.2026**
(21) Application number: 24908000.3
(22) Date of filing: 17.12.2024
(51) Int. Cl.: G01N 3/12, G01N 3/04, G01N 3/40

(54) **MEASUREMENT METHOD FOR MEASURING COMPRESSIVE STRENGTH OF PARTICLES**

(30) Priority: 18.12.2023 KR 20230185265
(71) Applicant: POSCO Holdings Inc., Pohang-si, Gyeongsangbuk-do 37859 (KR)
(72) Inventor: LEE, Seonhwa, Pohang-si, Gyeongsangbuk-do 37859 (KR); PARK, Jongil, Pohang-si, Gyeongsangbuk-do 37859 (KR); HAN, Juhyeong, Pohang-si, Gyeongsangbuk-do 37859 (KR); NAM, Sang Cheol, Pohang-si, Gyeongsangbuk-do 37859 (KR)
(74) Representative: Pfenning, Meinig & Partner mbB
(86) International application number: PCT/KR2024/020460
(87) International publication number: WO 2025/135717

(57) **Abstract**

A method for measuring particle strength according to one embodiment of the present invention may include: loading a particle sample into a sample accommodation space of a chamber portion; applying vibration to the chamber portion using a vibration generating portion to uniformly distribute the particle sample; and lowering an upper pressing unit at a predetermined speed to compress the particle sample and measure strength.

## Description

### [TECHNICAL FIELD]

The present invention relates to a method for measuring compressive strength of particles.

### [BACKGROUND ART]

As technology development and demand for mobile devices increase, demand for secondary batteries as energy sources is rapidly increasing, and accordingly, much research has been conducted on secondary batteries capable of meeting various demands.

Typically, in terms of the shape of secondary batteries, demand is high for prismatic secondary batteries and pouch-type secondary batteries that can be applied to products such as mobile phones with a thin thickness. In terms of materials, demand is high for lithium secondary batteries such as lithium-ion batteries and lithium-ion polymer batteries, which have advantages such as high energy density, discharge voltage, and output stability.

In addition, a secondary battery includes an electrode assembly having a structure in which a separator is interposed between a positive electrode and a negative electrode. The positive electrode is rolled in the final stage of electrode manufacture in order to secure energy density and conductivity. At this time, many cracks occur in the positive electrode active material, and the broken positive electrode active material may be a critical cause of lifespan deterioration, gas generation, and deterioration of thermal stability. Accordingly, in order to measure the compressive strength of the positive electrode active material, the strength of individual particles of the positive electrode active material is measured using a nanoindenter. However, in this case, only a very small number of particles included in a large number of positive electrode active material particles are measured, and thus there is a problem in that accurate strength cannot be measured.

In addition, in a secondary battery, two or more types of positive electrode active materials are mixed and used in the positive electrode, and thus it is difficult to accurately measure the compressive strength of the mixed positive electrode active material powder. Due to this, there is a problem in that electrochemical performance of the manufactured secondary battery deteriorates.

### [DETAILED DESCRIPTION OF THE INVENTION]

### [Technical Problem]

One object of the present invention is to provide a method for measuring compressive strength of heterogeneous particles in which two or more types of particles are mixed.

### [Technical Solution]

A method for measuring strength of heterogeneous particles according to one embodiment of the present invention may include: loading a particle sample into a sample accommodation space of a chamber portion; applying vibration to the chamber portion using a vibration generating portion to uniformly distribute the particle sample; and lowering an upper pressing unit at a predetermined speed to compress the particle sample and measure strength.

In the step of applying vibration to the chamber portion using the vibration generating portion to uniformly distribute the particle sample, vibration intensity and vibration time of the vibration generating portion may be adjusted according to a particle size of the particle sample.

The particle sample may be heterogeneous particles in which large-particle-diameter particles and small-particle-diameter particles are mixed.

An average particle size of the large-particle-diameter particles may be 7 µm to 35 µm, and an average particle size of the small-particle-diameter particles may be 1 µm to 5 µm.

The particle sample may be one or more selected from lithium metal oxides or lithium metal salts.

The particle sample may be accommodated in the chamber portion to occupy 1/3 to 2/3 of a volume of the sample accommodation space.

In the step of lowering the upper pressing unit at a predetermined speed to compress the particle sample and measure strength, the upper pressing unit may move at a speed of 0.005 mm/s to 1 mm/s.

In the step of lowering the upper pressing unit at a predetermined speed to compress the particle sample and measure strength, the magnitude of pressure applied to the particle sample may be measured in real time and transmitted to a data collection portion.

The strength of the particle sample may be measured by using, as a starting point, a time point at which the magnitude of pressure applied to the particle sample reaches 10 MPa.

### [Advantageous Effects]

The method for measuring particle strength according to one embodiment of the present invention can effectively measure strength with respect to heterogeneous particles.

### [BRIEF DESCRIPTION OF THE DRAWINGS]

FIG. 1 is a schematic view of a particle strength measuring apparatus according to one embodiment of the present invention.
FIG. 2 is a photograph of a particle strength measuring apparatus used in an Example of the present invention.
FIGS. 3 and 4 show experimental results of compressive strength measurement according to an Example of the present invention.
FIGS. 5 and 6 show particle size analysis results of particle samples according to an Example of the present invention.
FIGS. 7 and 8 show SEM images of particle samples before and after compression according to an Example of the present invention.

### [BEST MODE FOR CARRYING OUT THE INVENTION]

In the present specification, terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

One embodiment of the present invention provides a particle strength measuring apparatus for measuring strength of particles having various particle diameters.

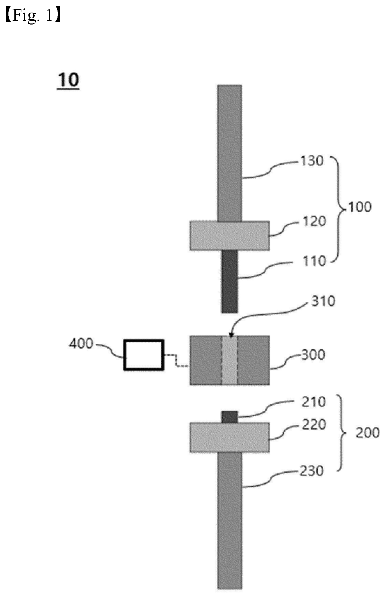

FIG. 1 is a schematic view of a particle strength measuring apparatus according to one embodiment of the present invention.

Referring to FIG. 1, a particle strength measuring apparatus 10 according to one embodiment of the present invention may include an upper jig portion 100, a chamber portion 300, a lower jig portion 200, and a vibration generating portion 400.

The upper jig portion 100 may include an upper pressing unit 110, an upper flange 120, and an upper connecting rod 130.

The upper pressing unit 110 may be positioned below the upper flange 120, the upper connecting rod 130 may be positioned above the upper flange 120, and the upper pressing unit 110 may be inserted into the inside of a through-hole 310 of the chamber portion 300, which will be described below, from an upper portion of the through-hole 310.

The upper jig portion 100 may be electrically connected to a speed controller (not shown), and an up-and-down movement speed may be adjusted by the speed controller. The speed controller may be electrically connected to the upper connecting rod 130 or the upper connecting rod 130. Meanwhile, the upper jig portion 100 may be supported by a support portion (not shown).

The upper pressing unit 110, the upper flange 120, and the upper connecting rod 130 may have the same central axis in a vertical direction.

A ratio (L1/L3) of a length (L1) of the upper pressing unit to a depth (L3) of the through-hole may be 1 to 1.5. Satisfying the above range is preferable because particles accommodated in an accommodation space of the chamber portion 300 to be described below can be effectively pressed.

The upper pressing unit 110 may move in an up-and-down direction inside the upper flange 120 and the upper connecting rod 130, and an exposed length below the upper flange 120 may be adjusted by an electrically connected controller. Such a configuration is preferable because a length inserted into the accommodation space positioned in the chamber portion 300 to be described below can be adjusted, and the length of the upper pressing unit 110 can be adjusted according to the amount of particles to be measured.

In one embodiment of the present invention, the horizontal cross section of the upper pressing unit 110 may be circular with a diameter of 8 mm and may have a vertical length of 32 mm. The upper flange may have a horizontal diameter of 40 mm and a vertical height of 15 mm, and the upper connecting rod may have a horizontal cross section with a diameter of 12 mm and a length of 70 mm.

The chamber portion 300 may have the through-hole 310 formed in a central portion in the vertical direction (z-axis direction).

The chamber portion 300 may be electrically connected to the vibration generating portion 400.

The vibration generating portion 400 may apply vibration to a particle sample loaded into an accommodation space formed in the chamber portion 300, so that the particle samples are uniformly dispersed. Meanwhile, vibration intensity and/or vibration time of the vibration generating portion 400 may be adjusted according to the particle size and type of the particle sample. Applying vibration to the particle sample as described above is preferable because voids between particles can be minimized, thereby reducing an error range of the measured particle strength.

Meanwhile, the vibration generating portion 400 may be electrically connected to a controller (not shown), and the vibration intensity and vibration time may be adjusted according to characteristics of the particle sample input to the controller.

An additional support plate (not shown) may be positioned at an inner lower end of the through-hole 310. Including the support plate is preferable because the particle sample can be stably accommodated. However, the present invention is not limited thereto.

Meanwhile, in the present invention, the maximum particle size of the particle sample may be 35 µm or less.

Meanwhile, in the present invention, the maximum particle size of the particle sample may be 35 µm or less. The particle sample may be a heterogeneous sample in which large-particle-diameter particles and small-particle-diameter particles are mixed, an average particle size of the large-particle-diameter particles may be 7 µm to 35 µm, and an average particle size of the small-particle-diameter particles may be 1 µm to 5 µm.

The particle sample may be one or more selected from lithium metal oxides or lithium metal salts.

The particle sample may be accommodated to occupy 1/3 to 2/3 of a volume of the accommodation space. Accommodating the particle sample within the above range is preferable because leakage of particles can be prevented during strength measurement, and an error range of the measured particle strength can be reduced.

In one embodiment of the present invention, the chamber portion 300 may have a horizontal cross-sectional diameter of 40 mm and a height of 25 mm, and the through-hole 310 may have a horizontal cross-sectional diameter of 8 mm.

The lower jig portion 200 may include a lower support unit 210, a lower flange 220, and a lower connecting rod 230.

Meanwhile, the lower support unit 210 to be described below may be inserted into the through-hole 310 from a lower portion of the through-hole 310.

A ratio (L2/L3) of a length (L2) of the lower support unit 210 to the depth (L3) of the through-hole 310 may be 0.2 to 0.3. The lower support unit 210 having the above ratio is inserted into the through-hole 310 in a lower direction of the through-hole 310, thereby forming, inside, an accommodation space capable of accommodating particles formed by an upper surface of the lower support unit 210 and an inner space of the through-hole 310. This is preferable because the particles accommodated inside can be stably supported so as not to leak to the outside even when the particles are pressed.

A length by which the lower support unit 310 is inserted into the through-hole 310 may be the entire length of the lower support unit 310, specifically 1/5 or more, and more specifically 1/2 or more.

Meanwhile, the lower support unit 310 may include a pressure sensor portion (not shown) to measure pressure applied to the particle sample in real time.

The lower jig portion 200 and the chamber portion 300 may have an integrated structure, and specifically, the lower flange 220 and the chamber portion 300 may have a structure coupled to a separate coupling member (not shown). The structure and type of the coupling member are not particularly limited as long as the lower flange 220 and the chamber portion 300 can be stably coupled and decoupled. Forming a structure for coupling or decoupling the lower flange 220 and the chamber portion 300 as described above is preferable because the apparatus can be effectively cleaned after strength measurement for each sample, thereby reducing measurement errors.

In one embodiment of the present invention, the lower support unit may have a horizontal cross-sectional diameter of 8 mm and a vertical length of 6 mm. The lower flange may have a horizontal diameter of 40 mm and a vertical height of 15 mm, and the lower connecting rod may have a horizontal cross section with a diameter of 12 mm and a length of 70 mm.

In one embodiment of the present invention, the upper jig portion 100, the lower jig portion 200, and the chamber portion 300 may be made of steel or ceramic.

A method for measuring particle strength according to another embodiment of the present invention may use the particle strength measuring apparatus.

After the lower jig portion and the chamber portion of the particle strength measuring apparatus are stably coupled, a particle sample may be loaded into the accommodation space formed in the chamber portion, and then the vibration generating portion may be operated to uniformly distribute the accommodated particle sample.

At this time, the vibration intensity and/or vibration time of the vibration generating portion may be controlled according to the particle size of the particle sample. Meanwhile, the vibration generating portion may be electrically connected to the controller, and the vibration intensity and vibration time may be adjusted according to characteristics of the particle sample input to the controller. At this time, when information on the particle size of the target particle sample and a quantity ratio according to the particle size is input to the controller, the controller may automatically control the vibration intensity and vibration time of the vibration generating portion to apply vibration to the particle sample.

At this time, the maximum particle size of the particle sample may be 35 µm or less, and the particle sample may be accommodated to occupy 1/3 to 2/3 of the volume of the accommodation space. Accommodating the particle sample within the above range is preferable because leakage of particles can be prevented during strength measurement, and the error range of the measured particle strength can be reduced.

Next, the upper jig portion is moved downward, and the upper pressing unit is inserted into the accommodation space to press the particle sample.

At this time, a lowering speed of the upper pressing unit may be 1 mm/s or less, specifically 0.005 to 1 mm/s, and more specifically 0.01 to 0.5 mm/s, 0.01 to 0.1 mm/s, or 0.01 to 0.05 mm/s.

When the above lowering speed is satisfied, particle strength can be effectively measured. When the lowering speed exceeds the above range, rapid collision between particles occurs and cracks occur in the particles, increasing an error of the measured strength value, which is not preferable. When the lowering speed is less than the above range, mechanical operation is difficult and it is difficult to accurately measure the strength of particles, which is not preferable.

The magnitude of pressure applied to the particle sample may be measured by the sensor portion provided in the lower jig portion, and the value may be transmitted to the data collection portion in real time. At this time, a work-hardening point may be confirmed using the pressure value transmitted from the data collection portion and displacement.

Meanwhile, in the present invention, the strength of the particle sample may be calculated by the data collection portion using, as a starting point, a time point at which the magnitude of pressure applied to the particle sample reaches 10 MPa.

### [MODE FOR CARRYING OUT THE INVENTION]

Hereinafter, embodiments of the present invention will be described in more detail through Examples. However, the following Examples are only preferred embodiments of the present invention, and the present invention is not limited by the following Examples.

### Example

Particle strength was measured with respect to the particles shown in the following table. The samples shown in the following table may be lithium metal oxides, and specifically are positive electrode active materials for a lithium secondary battery.

**[Table 1]**

| | Chemical Composition | D10 | D50 | D90 |
|---|---|---|---|---|
| Sample A (Poly Large | LiNi_{0.9}Co_{0.04}Mn_{0.04}Al_{0.02}O₂ | 10.7 | 13.6 | 18.2 |
| Particle) | | | | |
| Sample B (Poly Small Particle) | LiNi_{0.86}Co_{0.06}Mn_{0.07}Al_{0.01}O₂ | 2.3 | 3.6 | 5.3 |
| Sample C (Single) | LiNi_{0.86}Co_{0.06}Mn_{0.07}Al_{0.01}O₂ | 2.5 | 3.5 | 5.1 |

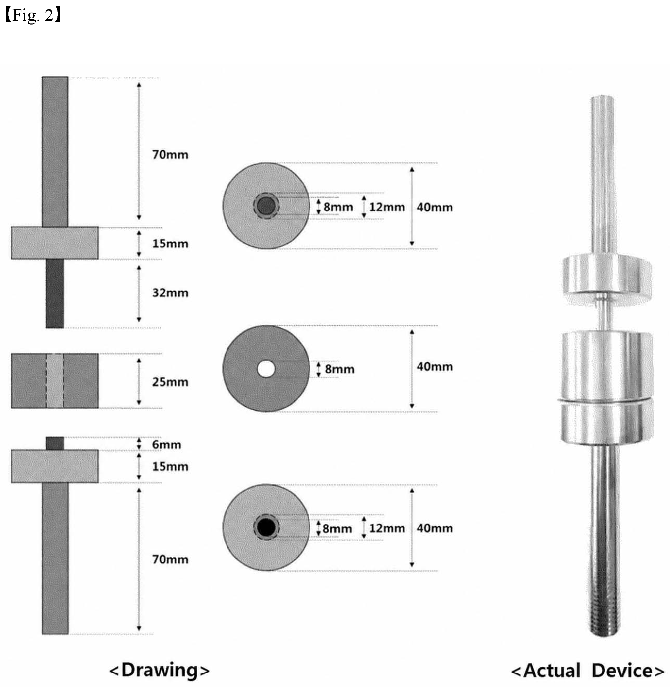

Meanwhile, the samples were mixed as described in Table 2 below to prepare Particle Sample 1 and Particle Sample 2, and the particle strength measuring apparatus is shown in FIG. 2.

After the inside of the sample accommodation space of the chamber portion was purged with an inert gas, the sample was loaded so as to fill about 1/3 to 2/3 of the accommodation space, and then a vibration generator was operated for 10 seconds to 30 seconds so that the filled sample was uniformly distributed. At this time, the lower support unit of the lower jig portion was inserted into the sample space to stably support the particle sample.

Next, the upper jig portion was lowered with a lowering speed controlled to 0.01 mm/s by the controller, and the upper pressing unit was inserted into the sample accommodation space to press the internal sample particles. The pressing end point was 600 MPa.

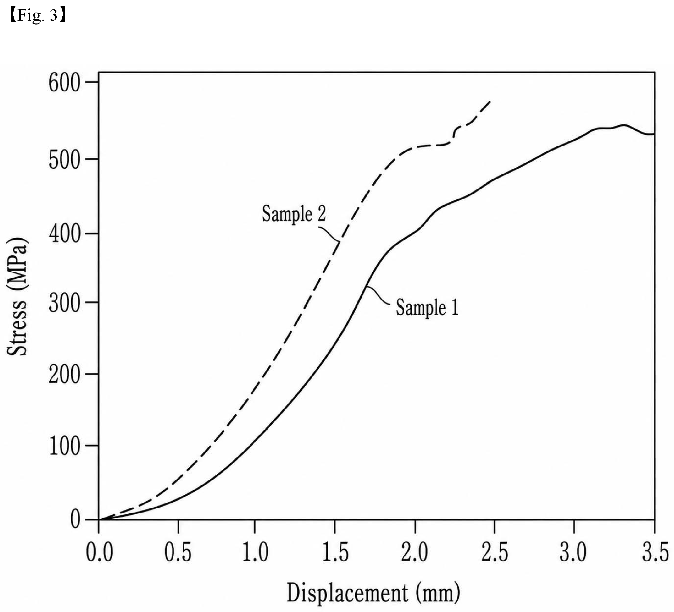

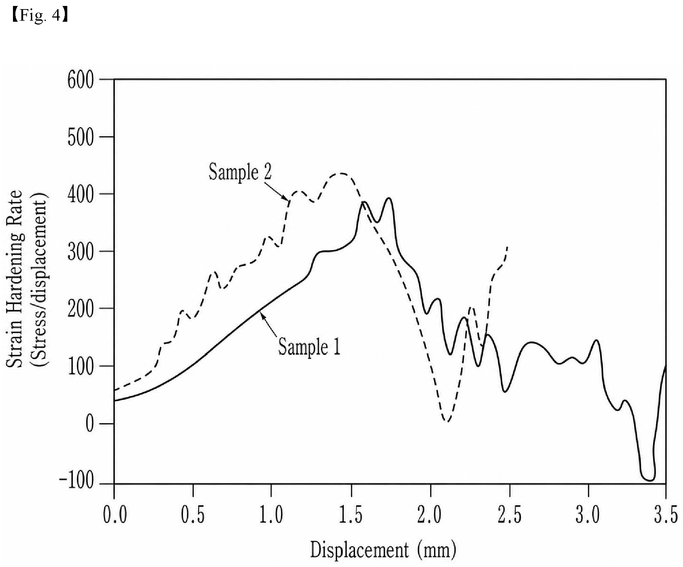

At this time, pressure applied to the sample particles was detected by a pressure sensor provided in the lower support unit, and the pressure value could be checked in real time, and the results are shown in FIGS. 3 and 4. At this time, the strength measurement start point was set as a time point at which the compression pressure reached 10 MPa.

After completion of the particle strength experiment, analysis results such as particle size are shown in Table 2 below.

**[Table 2]**

| | | Sample 1 | sample 2 |
|---|---|---|---|
| Mixing Weight Ratio | | Sample A:Sample B | Sample A:Sample C |
| | | 80wt%:20wt% | 80wt%:20wt% |
| Stress at 1.5mm (MPa) | | 271 ± 23 | 385 ± 18 |
| Max Hardening Displacement (mm) | | 1.27 ± 0.08 | 1.65 ± 0.08 |
| Max Hardening Stress (MPa) | | 300 ± 37 | 306 ± 25 |
| D[3,2] | Before Pressing | 9.6 | 8.7 |
| | After Pressing | 0.4 | 6.6 |
| D[4,3] | Before Pressing | 12.9 | 9.8 |
| | After Pressing | 12.6 | 11.7 |
| D(10) | Before Pressing | 6.0 | 1.1 |
| | After Pressing | 4.0 | 3.0 |
| D(50) | Before Pressing | 12.6 | 9.9 |
| | After Pressing | 12.5 | 11.5 |
| D(90) | Before Pressing | 20.2 | 18.5 |
| | After Pressing | 20.2 | 19.5 |

In Table 2, "Stress at 1.5 mm" means an output pressure value when the upper jig has moved by 1.5 mm relative to the initial height.

Compression experiment results of Samples 1 and 2 are shown in FIGS. 3 to 6.

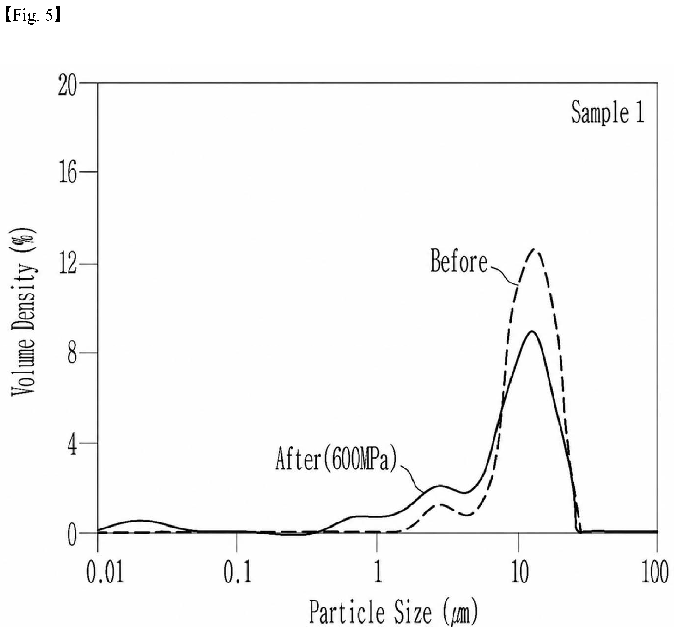

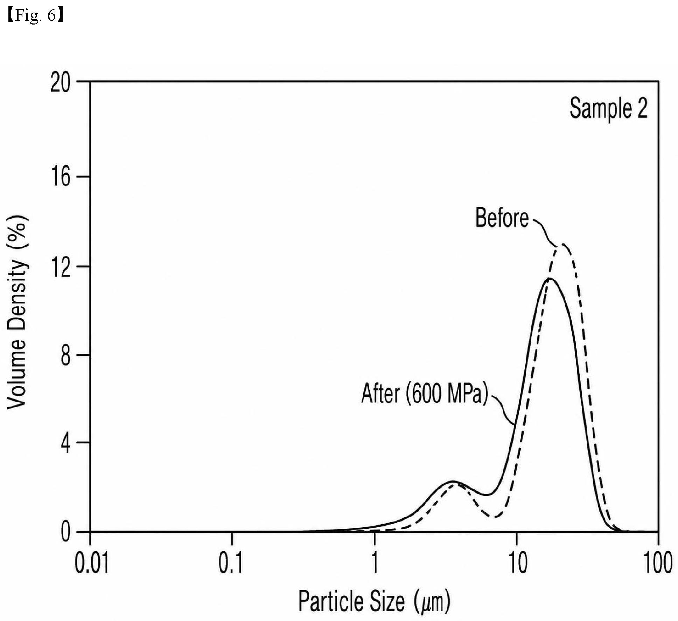

FIGS. 5 and 6 show particle size analysis results of Samples 1 and 2 before and after compression.

Referring to FIGS. 5 and 6, it can be confirmed that particle sizes of both Sample 1 and Sample 2 decreased when compressed to 600 MPa, and in the case of Sample 1, it can be confirmed that the decrease in particle size was relatively greater than that of Sample 2.

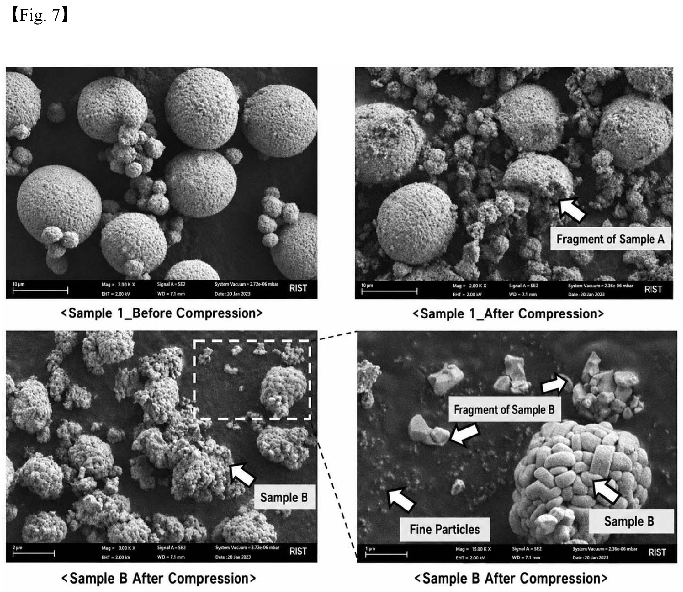

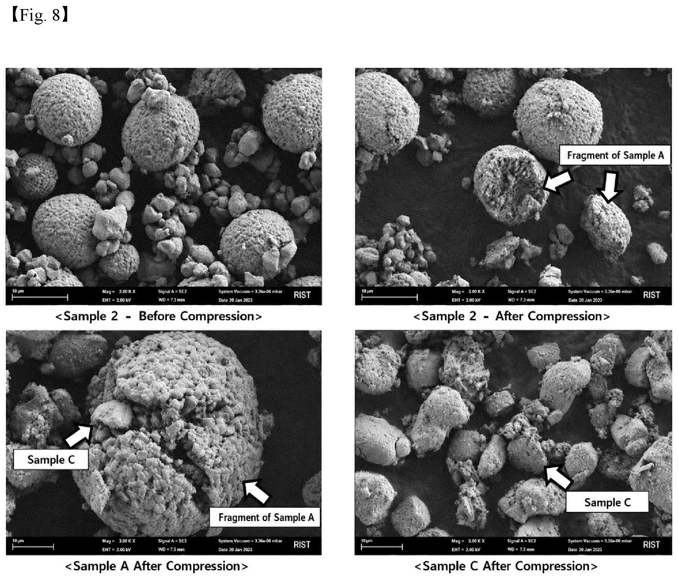

FIG. 7 shows SEM images of Sample 1 before and after compression, and FIG. 8 shows SEM images of Sample 2 before and after compression.

In the present invention, by checking the compressive strength of a positive electrode active material to be used in a lithium secondary battery using the particle strength measuring apparatus and the particle strength measuring method, problems caused by fracture of the positive electrode active material, which may occur in a downstream lithium secondary battery manufacturing process, can be prevented in advance.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A method for measuring particle strength, comprising:
loading a particle sample into a sample accommodation space of a chamber portion;
applying vibration to the chamber portion using a vibration generating portion to uniformly distribute the particle sample; and
lowering an upper pressing unit at a predetermined speed to compress the particle sample and measure strength.

2. The method for measuring particle strength of claim 1,
wherein, in applying vibration to the chamber portion using the vibration generating portion to uniformly distribute the particle sample,
vibration intensity and vibration time of the vibration generating portion are adjusted according to a particle size of the particle sample.

3. The method for measuring particle strength of claim 1,
wherein the particle sample is heterogeneous particles in which large-particle-diameter particles and small-particle-diameter particles are mixed.

4. The method for measuring particle strength of claim 3,
wherein an average particle size of the large-particle-diameter particles is 7 µm to 35 µm, and
wherein an average particle size of the small-particle-diameter particles is 1 µm to 5 µm.

5. The method for measuring particle strength of claim 1,
wherein the particle sample is one or more selected from lithium metal oxides or lithium metal salts.

6. The method for measuring particle strength of claim 1,
wherein the particle sample is accommodated in the chamber portion to occupy 1/3 to 2/3 of a volume of the sample accommodation space.

7. The method for measuring particle strength of claim 1,
wherein, in lowering the upper pressing unit at a predetermined speed to compress the particle sample and measure strength,
the upper pressing unit moves at a speed of 0.005 mm/s to 1 mm/s.

8. The method for measuring particle strength of claim 1,
wherein, in lowering the upper pressing unit at a predetermined speed to compress the particle sample and measure strength,
a magnitude of pressure applied to the particle sample is measured in real time and transmitted to a data collection portion.

9. The method for measuring particle strength of claim 8,
wherein the strength of the particle sample is measured by using, as a starting point, a time point at which a magnitude of pressure applied to the particle sample reaches 10 MPa.
